# DEMANDE DE BREVET EUROPEEN

(11) **EP 1 028 012 A2**
(43) Date de publication de la demande: **16.08.2000**
(21) Numéro de dépôt: 00460013.6
(22) Date de dépôt: 09.02.2000
(51) Int. Cl.: B60H 1/00

(54) **Dispositif de chauffage et/ou de climatisation d'habitacle de véhicules automobiles**

(30) Priorité: 09.02.1999 FR 9901508
(71) Demandeur: Bordier, Philippe, 94450 Limeil Brevannes (FR)
(72) Inventeur: Bordier, Philippe, 94450 Limeil Brevannes (FR)
(74) Mandataire: Vidon, Patrice

(57) **Abrégé**

L'invention concerne un dispositif générant de l'air chaud ou froid, notamment pour véhicule, du type comportant des moyens d'admission d'un flux d'air communiquant avec des organes de climatisation et/ou de réchauffage d'air, et des moyens de distribution propres à répartir le flux d'air dans l'habitacle dudit véhicule, caractérisé en ce qu'il comporte une chambre de distribution (54) comportant une bouche d'admission tubulaire (58) et une bouche de sortie (59) dont les axes sont sensiblement perpendiculaires, ladite chambre de distribution (54) étant montée à rotation sur l'axe de ladite bouche d'admission (58) dans un boîtier (1, 2) à la périphérie duquel sont ménagées des ouvertures (61), (62), (63), (64), (65) susceptibles de communiquer avec ladite une bouche de sortie (59), de telle sorte que le flux d'air entrant dans ladite bouche d'admission tubulaire (58) soit distribué vers l'une ou l'autre des ouvertures (61), (62), (63), (64), (65) par simple rotation de ladite chambre de distribution (54).

## Description

L'invention concerne un dispositif de chauffage et/ou de climatisation, notamment pour véhicules automobiles. Plus précisément, l'invention concerne un système d'orientation et de distribution d'un flux d'air entrant, vers les différents organes du dispositif de chauffage et/ou de climatisation.

On connaît déjà des dispositifs de ce type comportant un boîtier dans lequel est introduit un flux d'air extérieur pulsé venant d'un ventilateur, le flux d'air étant orienté vers les organes de chauffage, de refroidissement ou de climatisation avant d'être envoyé dans l'habitacle par des orifices de sortie.

Classiquement, un dispositif de ce type comporte un boîtier d'admission d'air communiquant avec un conduit générant de l'air froid et un conduit générant de l'air chaud, susceptibles de déboucher dans une chambre de mixage.

Le flux d'air est dirigé dans des conduits débouchant en différents endroits de l'habitacle du véhicule, ces conduits pouvant être en nombre et selon des configurations très variables d'un modèle de véhicule à l'autre.

L'orientation du flux d'air est généralement obtenu par la mise en oeuvre d'un jeu de volets complexe et volumineux, nécessitant le plus souvent d'être adapté à chaque modèle.

Or, les constructeurs ou équipementiers du secteur de l'automobile cherchent de nouvelles solutions pour réduire l'encombrement des équipements, en particulier pour ceux se trouvant sous la planche de bord.

L'invention a notamment pour objectif de pallier les inconvénients de l'état de la technique.

Plus précisément, un objectif de l'invention est de fournir un dispositif de chauffage et/ou de climatisation compact et fiable qui puisse s'adapter à tout type de véhicule.

L'invention a également pour objectif de fournir un tel dispositif, qui soit peu coûteux à fabriquer et à mettre en oeuvre.

Ces objectifs, ainsi que d'autres qui apparaîtront par la suite, sont atteint à l'aide d'un dispositif générant de l'air chaud ou froid, notamment pour véhicule, du type comportant des moyens d'admission d'un flux d'air communiquant avec des organes de climatisation et/ou de réchauffage d'air, et des moyens de distribution propres à répartir le flux d'air dans l'habitacle dudit véhicule. Le dispositif selon l'invention comporte une chambre de distribution comportant une bouche d'admission tubulaire et une bouche de sortie dont les axes sont sensiblement perpendiculaires, ladite chambre de distribution étant montée à rotation sur l'axe de ladite bouche d'admission dans un boîtier à la périphérie duquel sont ménagées des ouvertures susceptibles de communiquer avec ladite une bouche de sortie, de telle sorte que le flux d'air entrant dans ladite bouche d'admission tubulaire soit distribué vers l'une ou l'autre des ouvertures par simple rotation de ladite chambre de distribution.

Dans le cas d'une commande manuelle, l'occupant du véhicule intervient directement sur la chambre de distribution. Avantageusement, la chambre de distribution est solidaire d'un moyen de préhension.

Préférentiellement, la bouche de sortie intègre des bourrelets lui permettant de subir des déformations et des efforts de compression.

La chambre de distribution constitue ainsi un moyen simple et efficace pour orienter le flux d'air vers les différentes ouvertures du boîtier. De façon avantageuse, les ouvertures communiquent avec des moyens de distribution d'air répartis dans l'habitacle d'un véhicule.

Ainsi défini, le système d'orientation du flux d'air s'intègre facilement sous la planche de bord d'un véhicule. Afin de diminuer encore l'encombrement de la planche de bord, différentes commandes peuvent être montées de façon concentrique. Selon une solution préférée, des commandes de mixage d'air et de débit d'air sont montées tournantes sur l'axe de la chambre de distribution.

Selon une autre caractéristique du dispositif, la commande de débit d'air est solidaire d'un bras portant en son extrémité libre des moyens pour conduire un courant électrique, des pistes conductrices étant disposées en arc de cercle de telle sorte que lesdits moyens puissent être au contact de l'une ou l'autre desdites pistes conductrices, celles-ci étant reliées au moteur d'un ventilateur pour faire varier sa vitesse.

Toujours de façon à limiter l'encombrement, la commande du débit d'air peut être astucieusement combinée à la commande de recyclage. Pour atteindre cet objectif, le bras est solidaire d'un bras sélectionnant à distance la prise d'air extérieur ou intérieur vers le ventilateur. Avantageusement, le bras porte un plot guidé dans la rainure d'un levier, ledit levier étant couplé à un câble de sélection à distance de la prise d'air extérieur ou intérieur.

De façon à former un ensemble compact, l'invention concerne également un dispositif générant de l'air chaud ou froid, notamment pour véhicule, du type comportant des moyens d'admission d'un flux d'air communiquant avec des organes de climatisation et/ou de réchauffage d'air, et des moyens de distribution propres à répartir le flux d'air dans l'habitacle dudit véhicule, le dispositif selon l'invention comportant un boîtier d'admission d'air comportant un système de cloisonnement délimitant un conduit central et un conduit périphérique, chaque conduit étant susceptible d'être obturé respectivement par des pales centrales et périphériques.

Selon une solution avantageuse, les pales sont portées par un axe de façon non coplanaire, l'axe étant monté tournant par rapport au boîtier.

Le système de cloisonnement délimite le conduit central et le conduit périphérique et divise en outre chaque conduit en quatre parties sensiblement identiques. Pour chaque conduit, les pales doivent donc être agencées pour obturer le conduit de façon combinée. Selon une solution préférée, quatre axes portant des pales sont montés dans le boîtier de façon coplanaire et deux à deux perpendiculaires de telle sorte que les pales centrales puissent être coplanaires tandis que les pales périphériques ne le sont pas, et inversement.

L'air entrant dans le dispositif peut être chauffé ou maintenu à sa température initiale. Des températures intermédiaires peuvent aussi être obtenues en mixant de l'air chauffé avec de l'air extérieur. Pour ce faire, les pales peuvent prendre des positions intermédiaires selon lesquelles le flux d'air passent dans des proportions variables dans les deux conduits.

Avantageusement, les axes portent en leur extrémité, du côté du conduit central, des engrenages s'engrénant de proche en proche, l'un au moins d'entre eux s'engrénant avec un engrenage solidaire d'une tige de commande.

Selon une autre caractéristique, les extrémités des engrenages délimitent entre elles un volume sensiblement sphérique destiné à recevoir un embout sphérique porté par la tige de commande. En outre, la tige de commande porte en son extrémité opposé audit embout sphérique un moyen de préhension.

Selon un autre aspect préféré de l'invention, les pales ont une face aimantée pour coopérer avec des parties métalliques du cloisonnement et assurer l'étanchéité de la position fermée.

Préférentiellement, le conduit central communique avec l'évidemment central d'un échangeur thermique annulaire tandis que le conduit périphérique communique avec la périphérie dudit échangeur thermique annulaire.

Comme mentionné ci-dessus, le boîtier d'admission communique avec un échangeur thermique. Ce dernier est de conception tout à fait nouvelle pour contribuer à la compacité du dispositif et pour former un ensemble avec les caractéristiques déjà listées.

L'invention concerne également dispositif générant de l'air chaud ou froid, notamment pour véhicule, du type comportant des moyens d'admission d'un flux d'air communiquant avec des organes de climatisation et/ou de réchauffage d'air, et des moyens de distribution propres à répartir le flux d'air dans l'habitacle dudit véhicule, ledit dispositif comportant un échangeur thermique de forme extérieure sensiblement tubulaire présentant un évidement central.

Avantageusement, l'échangeur thermique comporte des circuits de circulation de fluide sur lesquels sont empilées des ailettes annulaires.

La conception de l'échangeur nécessite donc un circulation de fluide appropriée. Selon une solution préférée, les circuits de circulation de fluide communiquent avec une couronne de répartition cloisonnée de façon à séparer le flux entrant du flux sortant.

Dans le mode de réalisation mentionné précédemment, l'échangeur thermique génère de l'air chaud. Selon un deuxième et un troisième mode de réalisation, un dispositif générant de l'air froid peut être en ligne ou en étage amovible par rapport au dispositif générant de l'air chaud développé ci-dessus.

Préférentiellement, le dispositif selon l'invention comporte un échangeur thermique générant de l'air froid de forme extérieure sensiblement tubulaire présentant un évidement central. L'évidement central est obstrué par une paroi en amont de l'échangeur thermique par rapport au flux d'air, de telle sorte que le flux d'air soit dirigé vers la périphérie, puis vers l'évidemment central dudit échangeur thermique.

Dans le mode réalisation "en ligne", un échangeur thermique générant de l'air froid est placé en amont d'un boîtier d'admission, lui-même en amont dudit échangeur thermique générant de l'air chaud, lesdits moyens communiquant de proche en proche.

Dans le mode réalisation "en étage", un boîtier d'admission d'air et un échangeur thermique générant de l'air chaud, ledit boîtier d'admission d'air communiquant avec ledit échangeur thermique générant de l'air chaud, sont placés dans l'évidemment central dudit échangeur thermique, de telle sorte que le flux d'air entrant dans ledit évidement central pénètre dans ledit boîtier d'admission d'air.

D'autres caractéristiques et avantages de l'invention apparaîtront plus clairement à la lecture de la description suivante de trois modes de réalisation préférentiels de l'invention, donnés à titre d'exemples illustratifs et non limitatif et des dessins annexés parmi lesquels :
- la figure 1 représente une coupe longitudinale du dispositif de production d'air chaud ;
- la figure 2 représente une coupe brisée longitudinale du dispositif de production d'air chaud ;
- les figure 3 et 4 représentent une vue de face de la commande de recirculation, respectivement avec un jeu maxi et un jeu mini ;
- les figures 5 et 6 coupe A-A représentent de face le système d'orientation, respectivement avec les pales centrales fermées et les pales périphériques fermées ;
- la figure 7 représente une vue en perspective du système d'orientation ;
- la figure 8 représente une vue éclatée en perspective du système d'orientation ;
- la figure 9 représente une vue en perspective d'un cadre du système d'orientation ;
- la figure 10 représente une vue en perspective d'un ensemble axe pales ;
- la figure 11 représente un détail des engrenages des ensembles axes pales ;
- la figure 12 coupe B-B représente de face le dispositif de production d'air chaud ;
- La figure 13 coupe C-C représente de face le dispositif de production d'air chaud ;
- la figure 14 coupe D-D représente de face le dispositif de production d'air chaud ;
- la figure 15 vue suivant -F- représente la face de l'enjoliveur ;
- la figure 16 représente une coupe longitudinale du dispositif de climatisation en ligne ;
- la figure 17 représente une coupe longitudinale du dispositif de climatisation en étage amovible ;
- la figure 18 représente une coupe longitudinale du dispositif de production d'air chaud, coiffé du dispositif de production d'air froid.

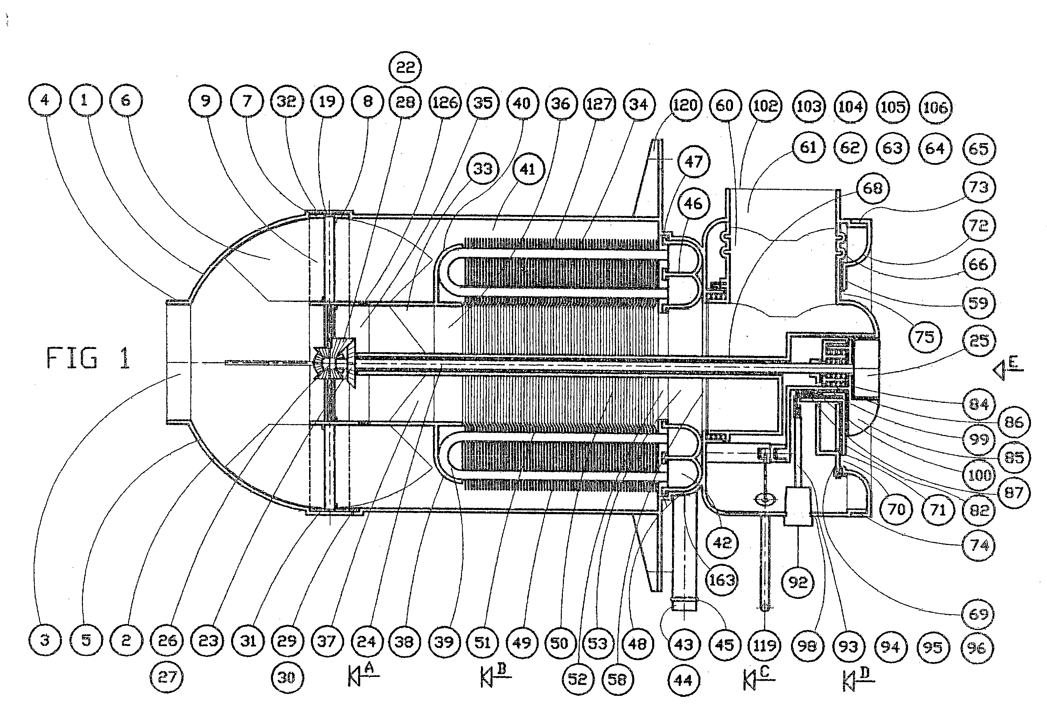

Comme illustré sur la figure 1, le dispositif de production d'air chaud se présente sous la forme d'un boîtier de forme tubulaire, composé de deux demies coques : une supérieure (1) et une inférieure (2).

En amont du boîtier ainsi formé, se trouve un orifice d'entrée du flux d'air extérieur pulsé (3) de section tubulaire. Cette section tubulaire (4) permet l'emboîtement d'un conduit, reliant le dispositif au ventilateur (non représenté).

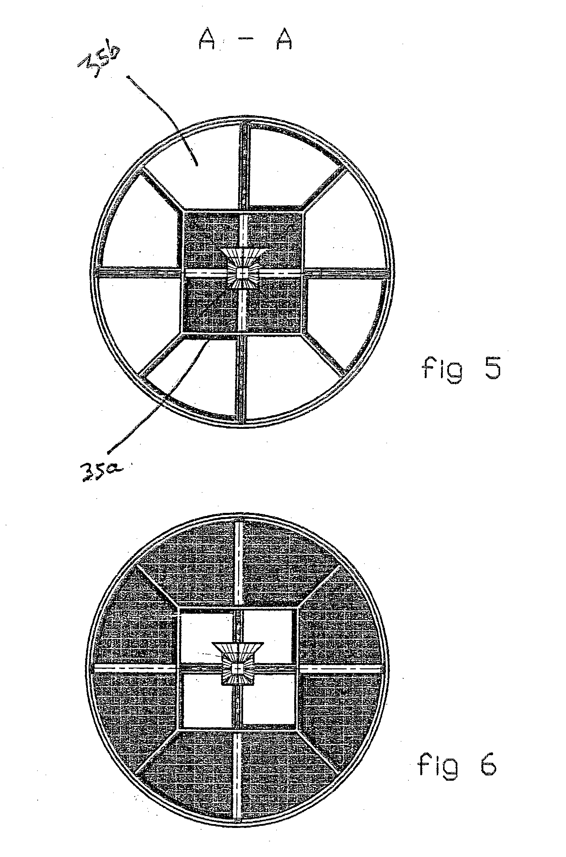

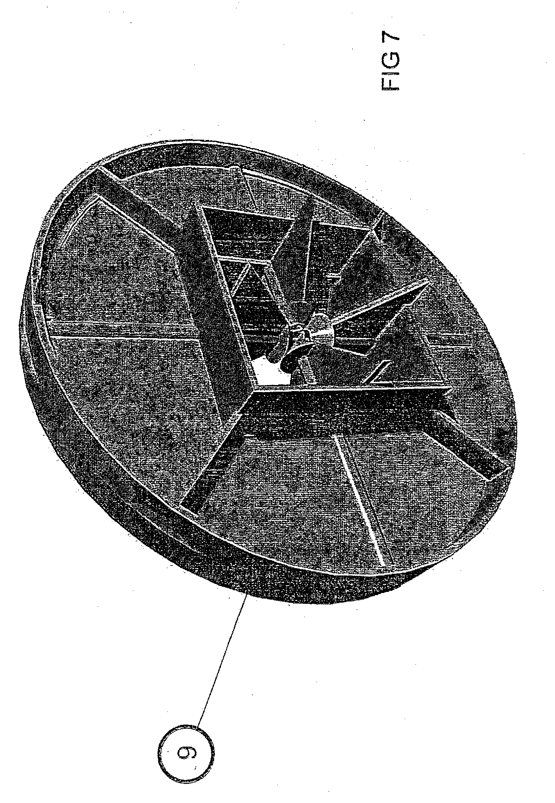

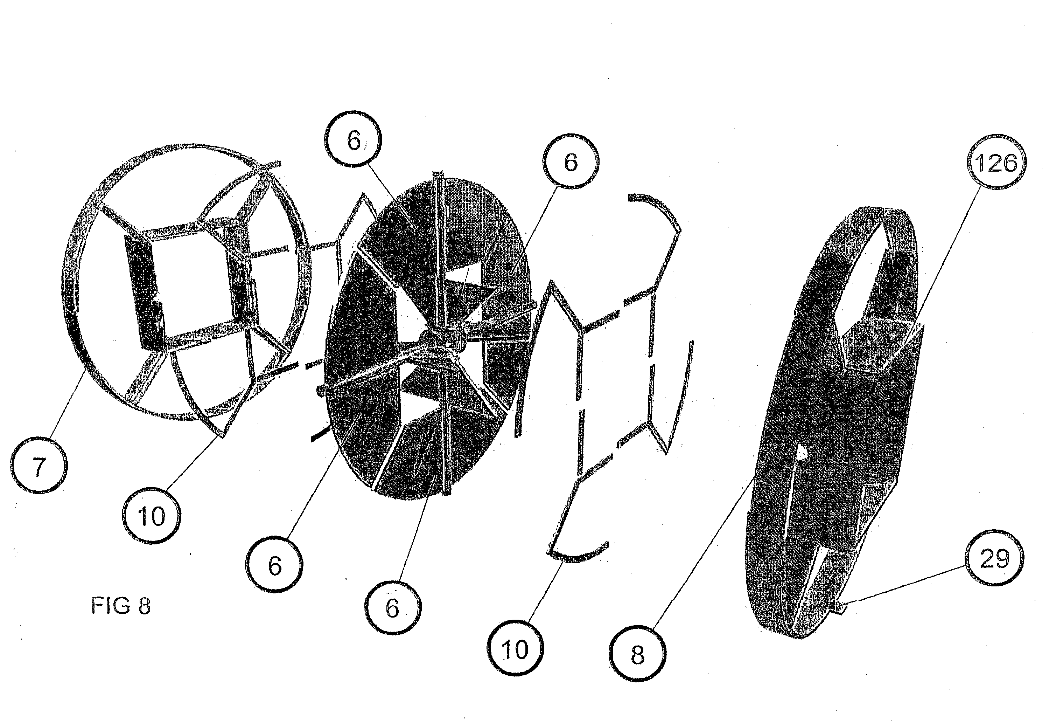

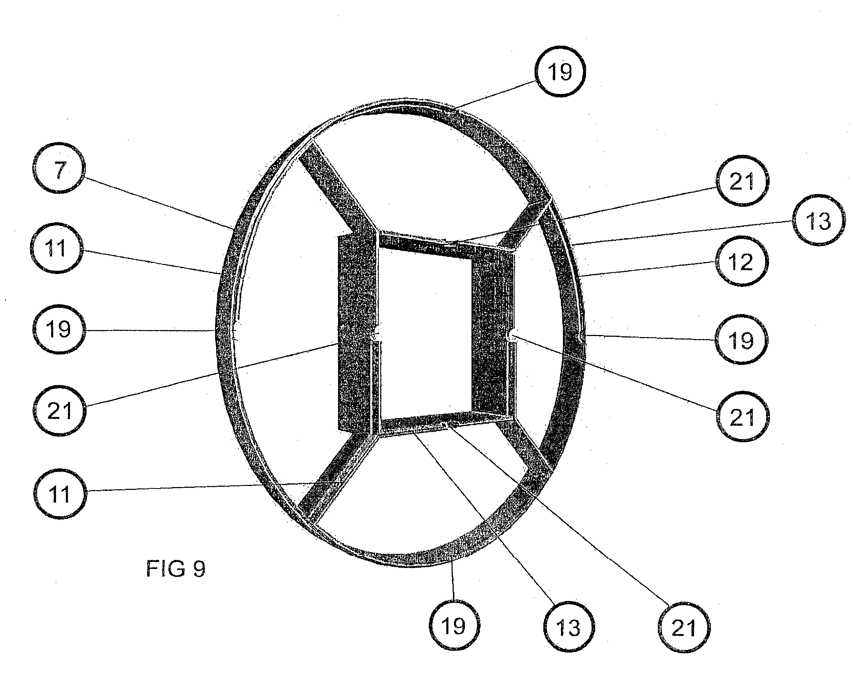

En aval de cette bouche d'entrée, le boîtier composé (1)(2) est de forme demi sphérique (5) permettant le débattement des axes/pales (6). Comme illustrés sur les figures 5 à 9, les axes/pales (6) sont maintenus ensemble dans un cadre d'entrée (7) et un cadre de sortie (8) formant l'ensemble du système d'orientation (9) avec les bagues métalliques (10), incluses dans le système d'orientation (9). Le cadre d'entrée (7) et le cadre de sortie (8) s'emboîtent ensemble par des formes mâles (11) et des formes femelles (12). Ces formes femelles (12) ont aussi la fonction de logement (13) des bagues métalliques (10).

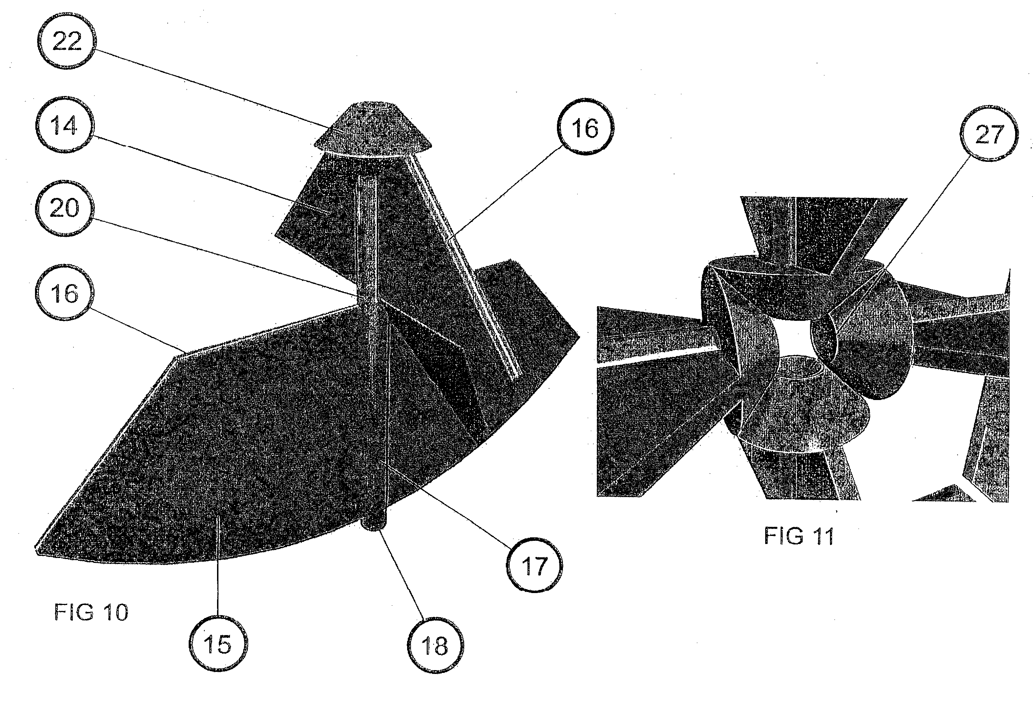

Comme représenté sur la figure 10, l'ensemble axes/pales (6) est composé d'une pale souple centrale (14) et d'une pale souple de périphérie (15). Chaque pale souple a une face aimantée (16). La pale souple centrale est liée solidairement à la pale de périphérie par un axe (17), et ce perpendiculairement. Côté pale de périphérie, l'axe dépasse légèrement (18), afin de se loger dans un demi lamage (19) inclus dans le cadre d'entrée (7) et le cadre de sortie (8).

L'espacement (20) entre la pale souple centrale (14) et la pale souple de périphérie (15) a pour objectif de se centrer dans les demis logements (21) inclus dans le cadre d'entrée (7) et le cadre de sortie (8). Côté pale souple centrale (14) un engrenage (22) permet de recevoir le mouvement de l'engrenage (23) solidaire à la tige de commande "mixage d'air" (24) entraînée par la forme de préhension "mixage d'air" (25) (figure 1). Sur un des axes/pales (6), l'engrenage (28) est d'un diamètre supérieur aux trois autres engrenages (22), pour s'engrener avec l'engrenage (23).

A l'opposé de cette forme de préhension "mixage d'air" (25), une sphère (26) est solidairement liée à la tige de commande "mixage d'air" (24), la sphère (26) étant destinée à venir se loger dans des formes sphériques femelles (27) (figure 11) incluses dans l'extrémité des engrenages (22) des axes/pales (6).

La forme mâle (29), solidaire au cadre de sortie (8), permet l'indexage de l'ensemble du système d'orientation (9) dans un logement de forme femelle (30) inclus dans la demie rainure d'emboîtement (31) située dans la demie coque inférieure (2). Une demie rainure d'emboîtement (32) est incluse dans la demie coque supérieure (1). Les demies rainures d'emboîtement (31)(32) permettent l'emboîtement de l'ensemble du système d'orientation (9).

Un conduit de liaison (33) permet de centrer et de maintenir l'échangeur thermique tubulaire évidé (34) générant de l'air chaud. Le conduit de liaison a une section de passage carrée creuse (35a) et s'emboîte dans le cadre (8) dans une forme (126) et une section de sortie circulaire creuse (36). La section de passage carrée creuse (35a) et la section de passage circulaire creuse (36) sont reliées par une forme de surface réglée creuse (37) pour permettre une transformation du flux d'air de section carrée en une section circulaire.

Sur la périphérie de la section de passage circulaire creuse (36) une forme (38) épouse la forme de cintrage des épingles (39) de l'échangeur thermique tubulaire évidé (34) générant de l'air chaud.

La forme (38) doit être sur sa peau extérieure lisse et permettre un bon écoulement du flux d'air (40).

Un vide tubulaire (41) est nécessaire entre la paroi intérieure des deux demies coques (1) (2) et l'échangeur thermique tubulaire évidé (34) générant de l'air chaud.

Le boîtier de répartition tubulaire (42) de l'échangeur thermique tubulaire évidé (34) générant de l'air chaud, est alimenté par la tubulure d'arrivée (43). La sortie de l'échangeur thermique tubulaire évidé (34) générant de l'air chaud est obtenue avec la tubulure de sortie (44). Les tubulures d'arrivée (43) et de sortie (44) traversent une demie coque (1) ou (2) par un ou des orifices (163). Il n'est pas nécessaire de prévoir un joint d'étanchéité à cet endroit. Une forme (45) permet de maintenir les durites d'alimentation et de départ.

Une cloison centrale (46) permet de séparer le liquide d'arrivée et de sortie dans le boîtier de répartition tubulaire (42). La couronne de liaison tubulaire (47) permet de lier solidairement et sans fuite le boîtier de répartition tubulaire (42) et les épingles (39) en laissant passer le liquide du boîtier de répartition tubulaire (42) et les épingles (39). Les formes extérieures du boîtier de répartition tubulaire (42) et de la couronne de liaison tubulaire (47) viennent se loger dans une forme intérieure (48) des deux demies coques (1)(2). Un vide tubulaire (52) évide la couronne de liaison tubulaire (47) et un vide tubulaire (53) évide le boîtier de répartition tubulaire (42).

Des ailettes conductrices de chaleur de section circulaire (49) sont empilées sur les épingles (39) par le biais d'orifices (127). Elles sont évidées en leur centre d'une section circulaire (50). Leurs bords de sortie (51) peuvent être inclinés dans un angle compris entre 10° et 90° par rapport à l'axe central du dispositif. La chambre de distribution (54) pivote en rotation suivant l'axe générale du dispositif.

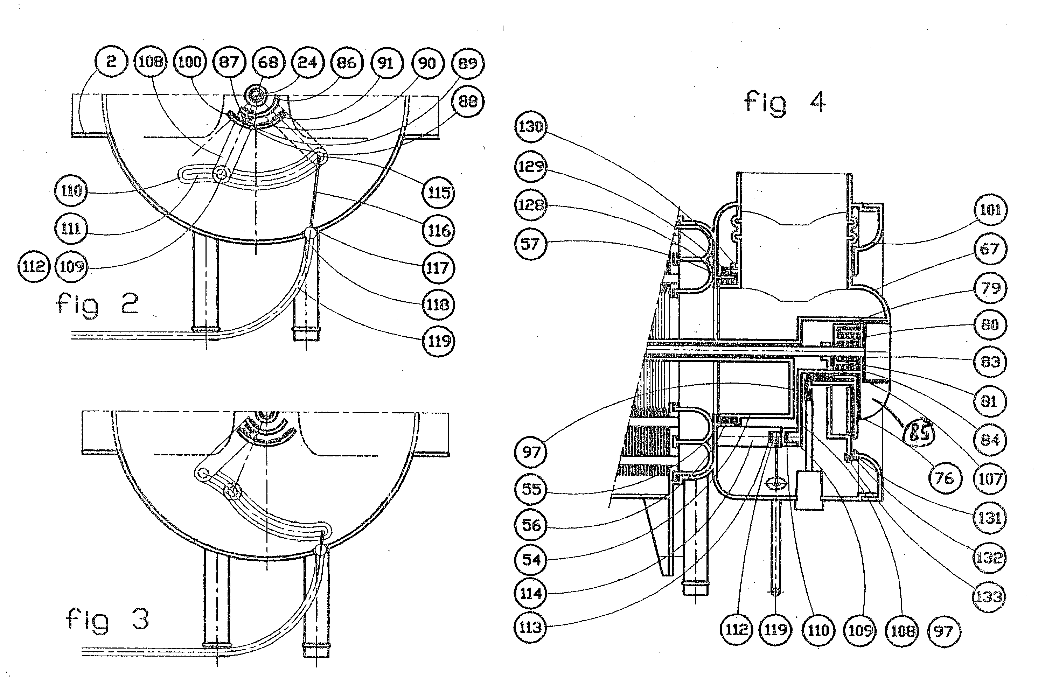

Comme représenté sur la figure 4, la rotation de la chambre de distribution (54) est favorisée par un roulement conventionnel ou un palier glissant en matière synthétique (55) lui même maintenu dans une demie couronne (56) incluse dans la demie coque inférieure (2) et une demie couronne (57) incluse dans la demie coque supérieure (1) formant ensemble un palier. Un vide tubulaire (58) évide les deux demies coques supérieure (1) et inférieure (2).

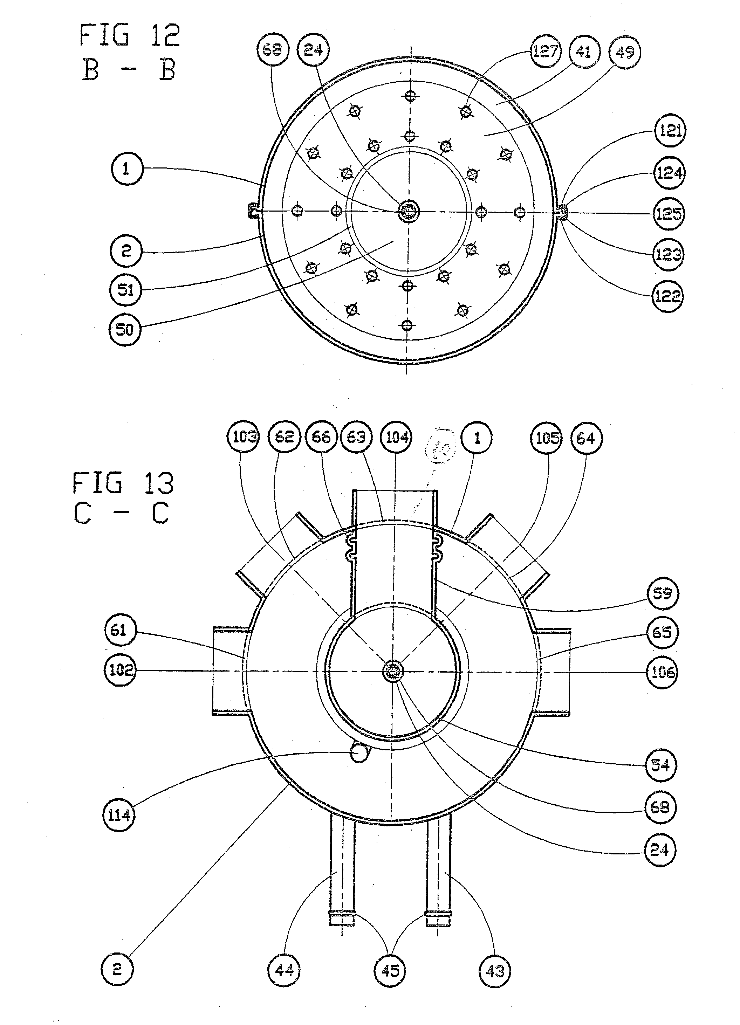

Comme indiqué sur la figure 13, la chambre de distribution (54) permet de distribuer le flux d'air grâce à une bouche de sortie (59). Cette bouche de sortie (59) est ouverte (60) d'une section identique aux ouvertures (61)(62)(63)(64)(65) incluses dans la demie coque supérieure (1). Des formes (66) permettant une déformation et une compression de la bouche de sortie (59) sont incluses dans celle-ci.

Une forme de préhension (67) est solidaire de la chambre de distribution (54) comme représenté sur la figure 1. Une forme tubulaire creuse (68) solidaire à la chambre de distribution (54) permet d'éviter toutes fuites d'air parasites.

Une pièce (69) est liée solidairement à la tige de commande de mixage d'air (24). Une indication visible (70) de la température ou une couleur allant du rouge au bleu peut être rapportée, collée, imprimée ou gravée. Cette indication (70) est rendue visible par une ouverture (71) incluse dans l'enjoliveur de style (72). Cet enjoliveur de style (72) s'emboîte dans un lamage (73) inclus dans la demie coque supérieure (1) et un lamage (74) inclus dans la demie coque inférieure (2).

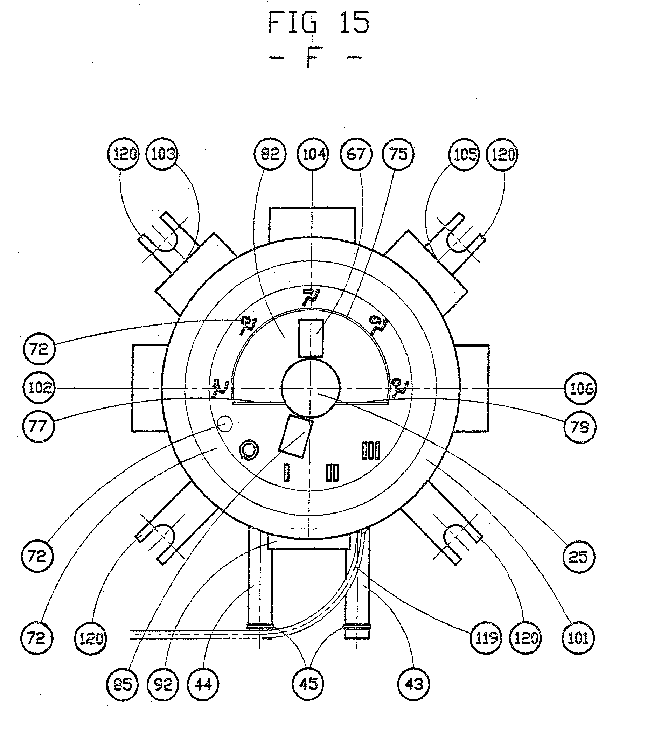

Comme illustré sur la figure 15, l'enjoliveur de style (72) est évidé (75) pour permettre le débattement de la commande de distribution (67). Un disque évidé (76) (figure 4) en son centre est solidairement lié à la chambre de distribution (54). Ce disque évidé (76) fait office d'obturateur de l'ouverture (75) lorsque la forme de préhension (67) est en butée gauche (77) ou en butée droite (78) extrême (figure 15). Le centre de l'enjoliveur de style (72) est constitué d'une forme en creux (79) de commande d'air (24).

Un palier de forme mâle (81) prend naissance au fond de la forme creuse (79) et se termine à fleur de la surface fonctionnelle (82) de l'enjoliveur de style (72) (figure 4). Ce palier de forme mâle (81) reçoit dans son diamètre intérieur, un roulement conventionnel ou un palier glissant en matière synthétique (83) permettant une bonne étanchéité et un bon mouvement de la tige de commande d'air (24). Ce palier de forme mâle (81) reçoit sur son diamètre extérieur, un roulement conventionnel ou un palier glissant en matière synthétique (84) (figure 4) permettant un bon mouvement de la commande du débit d'air (85).

Comme illustré sur la figure 2, la commande du débit d'air (85) a une forme (86) dépassant la forme creuse (79). En bout de cette forme (86) une pièce conductrice de courant électrique (87) vient s'emboîter sur elle. Cette pièce conductrice de courant électrique (87) a pour fonction, lors du mouvement de la commande de débit d'air (85) de mettre en contact entre elles des pistes conductrices de courant électrique mais de résistances différentes (89) (90)(91). A noter que la piste conductrice de courant électrique (88) a une surface de contact plus grande que les autres (89)(90)(91), sa résistance au courant électrique est nulle. Chaque piste conductrice (88)(89)(90)(91) est reliée à un connecteur électrique (92) par des fils électriques gainés appropriés (93)(94)(95)(96) soudés ou sertis sur elle (97).

Une ouverture (98) (figure 1) sur la demie coque inférieure (2) permet de centrer et de maintenir le connecteur électrique (92).

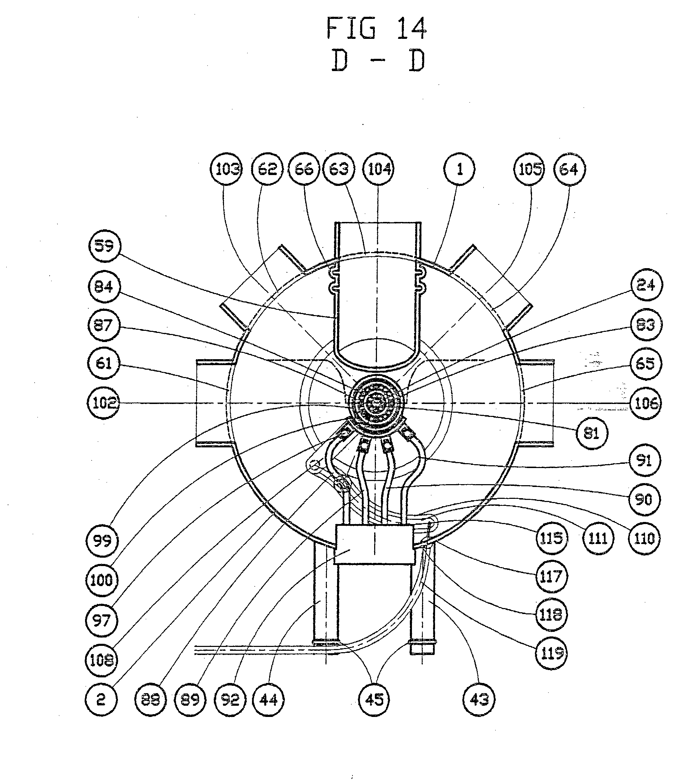

Comme représenté sur la figure 14, les pistes conductrices de courant électrique (88)(89)(90)(91) sont emboîtées et maintenues entre la forme intérieure (99) et la forme extérieure (100) liées solidairement à l'enjoliveur de style (72).

La face (101) (figure 15) de l'enjoliveur de style (72) est laissée aux soins des designers. Des conduits tubulaires creux (102)(103)(104)(105)(106) sont solidairement liés à la demie coque supérieure (1) et la demie coque inférieure (2). Ces conduits tubulaires creux (102)(103)(104)(105)(106) permettent d'emboîter des conduits, reliant le dispositif aux différents points de diffusion du flux d'air dans l'habitacle.

Une lumière (107) (figure 4) dans le fond de la forme en creux (79) permet le passage et le débattement de la forme (86). En bout de cette forme (86) (figures 2 et 3) une pièce d'entraînement (108) avec un plot (109) est liée solidairement sur celle-ci. Ce plot (109) permet de mouvoir le levier/came (110) en étant guidé par une rainure de guidage (111). Ce levier/came (110) pivote sur un plot mâle (112) centré dans une forme femelle (113) incluse dans un fût (114) (figure 4) lié solidairement à une demie coque (1)(2). En bout du levier/came (110) un orifice (115) (figure 2) permet de maintenir, avec un jeu de fonctionnement, l'embout du câble de commande à distance de la commande "recirculation". La valeur (116) issue du débattement du levier/came (110) permet de commander à distance le by-pass de la prise d'air extérieure vers le ventilateur avec de l'air de l'habitacle du véhicule. Un orifice (117) inclus dans la demie coque inférieure (2) permet l'introduction d'un attache câble (118) pour le maintien de la commande à distance (119).

Des formes extérieures (120) (figure 1) sont liées solidairement à la demie coque supérieure (1) et à la demie coque inférieure (2), elles permettent de fixer et de maintenir le dispositif sur la structure du véhicule.

Comme représenté sur la figure 12, la demie coque supérieure (1) présente des rainures d'accroche (121). La demie coque inférieure (2) présente des rainures d'accroche (122). Les deux demies coques sont centrées entre elles par des rainures longitudinales de formes mâle (123) et femelle (124) incluses dans les rainures d'accroche (121)(122). Les deux demies coques supérieure (1) et inférieure (2) sont une fois centrées entre elles maintenues par des agrafes métalliques (125).

Comme indiqué sur la figure 4, la sensation de crantage de la commande de fonction de distribution de l'air, est obtenue par des formes (128) sur le diamètre extérieur de la demie couronne (56) et (57) dans laquelle un clinquant (129) vient se loger. Ce clinquant est maintenu fixement dans une forme (130) liée solidairement à la chambre de distribution (54). La sensation de crantage de la commande de la fonction mixage d'air, est obtenue par une forme (131) incluse sur la peau intérieure de l'enjoliveur de style (72) dans laquelle un clinquant (132) vient se loger. Ce clinquant est maintenu fixement dans une forme (133) liée solidairement dans la pièce (69). La sensation de crantage de la commande de la fonction distribution de l'air est directement obtenue par le passage de la pièce conductrice (87) sur les autres pistes conductrices (88)(89)(90)(91).

Dans des deuxième et troisième modes de réalisation, un dispositif générant de l'air froid peut être en ligne par rapport au dispositif générant de l'air chaud développé ci-dessus ou en étage amovible.

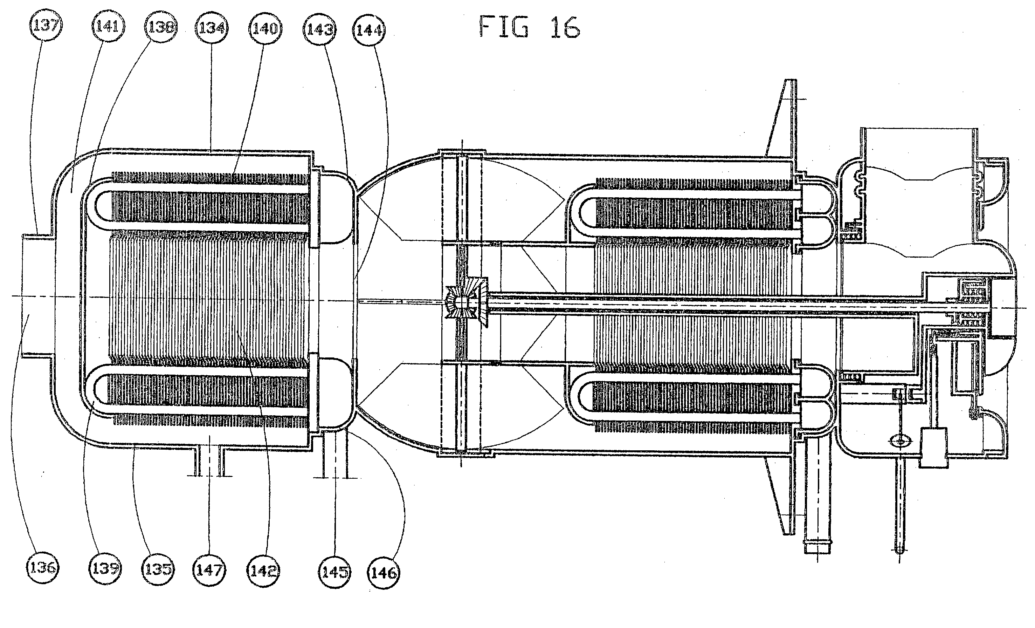

Comme illustré par la figure 16, le dispositif générant de l'air froid en ligne se présente sous la forme d'un boîtier, composé de deux demies coques une supérieure (134) et une inférieure (135) liées entre elles par des formes d'accroches (121), (122) munies de rainures longitudinales de formes mâle (123) et femelle (124) solidairement liées aux demies coques (134), (135) et maintenues par des agrafes métalliques (125) liées solidairement ou non aux demies coques du dispositif générant de l'air chaud (1)(2), de façon similaire au mode de réalisation précédent.

En amont du boîtier ainsi formé, se trouve un orifice d'entrée du flux d'air extérieur pulsé (136) de section tubulaire. Cette section tubulaire permet l'emboîtement d'un conduit, reliant le dispositif au ventilateur (137). Une forme (138) épousant la forme de cintrage des épingles (139) de l'échangeur thermique tubulaire évidé (140) générant de l'air froid, permet de canaliser le flux d'air extérieur pulsé dans un vide de passage (141) vers la périphérie extérieure de l'échangeur thermique tubulaire évidé (140) générant de l'air froid.

Le flux d'air froid pulsé sort de l'échangeur thermique tubulaire évidé (140) générant de l'air froid, dans sa partie centrale qui est évidée (124). Une forme intérieure (143) incluse dans les demies coques (134), (135) permet de loger et de maintenir en place l'échangeur thermique tubulaire évidé (140) générant de l'air froid. Un orifice de passage (144) permet au flux d'air froid pulsé de rentrer dans le dispositif générant de l'air chaud et de tempérer ainsi la température de sortie. Les tubulures d'alimentation et de sortie (145) de l'échangeur thermique tubulaire évidé (140) générant de l'air froid, passe au travers d'une demie coque (134) ou (135) par un orifice (146).

Une tubulure d'évacuation des eaux de condensation (147) est liée solidairement à une des demies coques (134) ou (135) en partie basse.

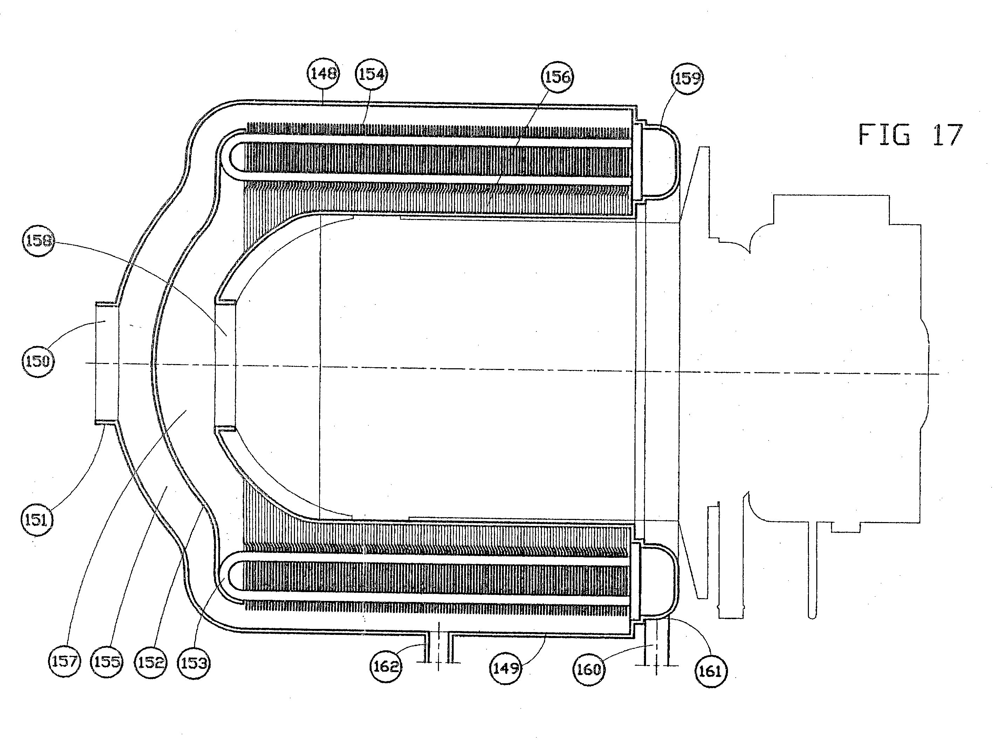

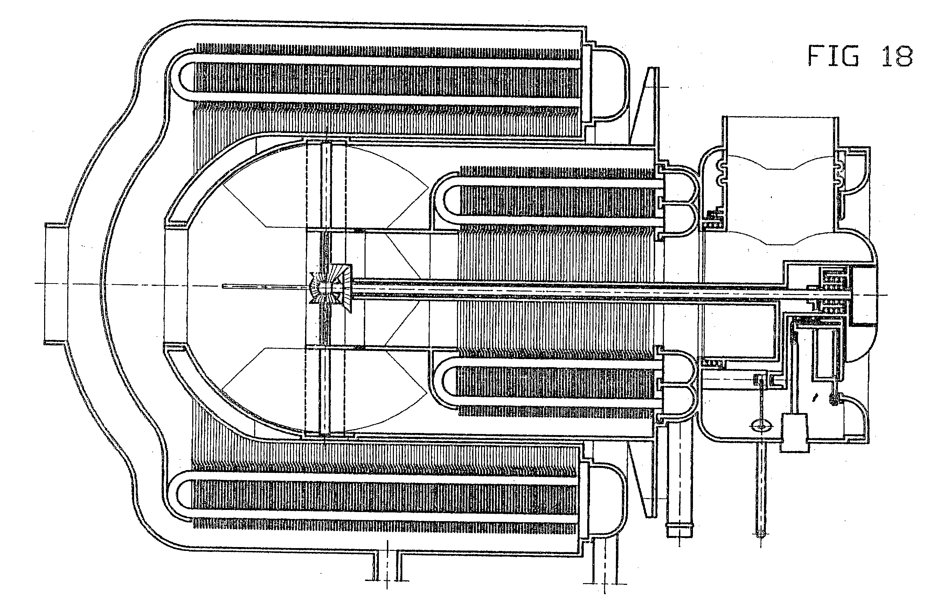

Dans un troisième mode de réalisation représenté par les figures 17 et 18, le dispositif générant de l'air froid en étage amovible, se présente sous la forme d'un boîtier tubulaire s'emboîtant dans le dispositif générant de l'air chaud qu'il complète.

Il est composé de deux demies coques : une supérieure (148) et une inférieure (149) liées entre elles par des formes d'accroche (121)(122) munies de rainures longitudinales de formes mâle (123) et femelle (124) solidairement liées aux demies coques (148)(149) et maintenues par des agrafes métalliques (125).

En amont du boîtier ainsi formé, se trouve un orifice d'entrée du flux d'air extérieur pulsé (150) de section tubulaire. Cette section tubulaire permet l'emboîtement d'un conduit reliant le dispositif au ventilateur (151). Une forme (152) épousant la forme de cintrage des épingles (153) de l'échangeur thermique tubulaire évidé (154) générant de l'air froid, permet de canaliser le flux d'air extérieur pulsé dans un vide de passage (155) vers la périphérie extérieure de l'échangeur thermique tubulaire évidé (154) générant de l'air froid, dans sa partie centrale évidée (156).

Un vide de passage (157) permet de canaliser le flux d'air froid vers l'entrée du dispositif (158) générant de l'air chaud et de tempérer ainsi sa température de sortie.

Une forme intérieure (159) incluse dans les demies coques (148)(149) permet de loger et de maintenir en place l'échangeur thermique tubulaire évidé (154) générant de l'air froid. Les tubulures d'alimentation et de sortie (160) de l'échangeur thermique tubulaire évidé (154) générant de l'air froid, passent au travers d'une demie coque (148) ou (149) par un orifice (161). Une tubulure d'évacuation des eaux de condensation (162) est liée solidairement à une des demies coques (148) ou (149) en partie basse. Le cadre d'entrée (7) et le cadre de sortie (8) s'indexent ensemble par des formes (11)(12) en maintenant solidairement la liaison. L'indication visible (70) peut être dans ou sur la pièce de forme (69). Le sens du flux d'air traversant l'échangeur thermique tubulaire évidé (34)(140)(154) peut être, soit de l'intérieur vers l'extérieur ou vice-versa.

Toutes les pièces référencées ci-dessus hors les références (24)(34)(57)(83)(84)(87)(100)(88)(89)(90)(91)(92)(93)(94)(95)(96)(108)(119) sont susceptibles d'être façonnés par injection ou soufflage de matière plastique. Les sens de démoulage sont naturels.

Les pièces (1)(2)(54) sont susceptibles d'être façonnées par injection ou soufflage de matière plastique, les sens de démoulage sont naturels avec coulisseaux. A titre d'exemple non limitatif, le boîtier du dispositif générant de l'air chaud ainsi défini aura des dimensions de l'ordre de 35cm de longueur et 15cm de diamètre.

Les dispositifs selon l'invention sont particulièrement destinés au chauffage et/ou la climatisation d'habitacle de véhicules automobiles.

## Revendications

1. Dispositif générant de l'air chaud ou froid, notamment pour véhicule, du type comportant des moyens d'admission d'un flux d'air communiquant avec des organes de climatisation et/ou de réchauffage d'air, et des moyens de distribution propres à répartir le flux d'air dans l'habitacle dudit véhicule,
caractérisé en ce qu'il comporte une chambre de distribution (54) comportant une bouche d'admission tubulaire (58) et une bouche de sortie (59) dont les axes sont sensiblement perpendiculaires, ladite chambre de distribution (54) étant montée à rotation sur l'axe de ladite bouche d'admission (58) dans un boîtier (1, 2) à la périphérie duquel sont ménagées des ouvertures (61), (62), (63), (64), (65) susceptibles de communiquer avec ladite une bouche de sortie (59), de telle sorte que le flux d'air entrant dans ladite bouche d'admission tubulaire (58) soit distribué vers l'une ou l'autre des ouvertures (61), (62), (63), (64), (65) par simple rotation de ladite chambre de distribution (54).

2. Dispositif générant de l'air chaud ou froid selon la revendication 1, caractérisé en ce que la chambre de distribution (54) est solidaire d'un moyen de préhension (67).

3. Dispositif générant de l'air chaud ou froid selon l'une quelconque des revendications 1 et 2, caractérisé en ce que la bouche de sortie (59) intègre des bourrelets (66) lui permettant de subir des déformations et des efforts de compression.

4. Dispositif générant de l'air chaud ou froid selon l'une quelconque des revendications 1 à 3, caractérisé en ce que les ouvertures (61), (62), (63), (64), (65) communiquent avec des moyens de distribution d'air répartis dans l'habitacle d'un véhicule.

5. Dispositif générant de l'air chaud ou froid selon l'une quelconque des revendications 1 à 4, caractérisé en ce que des commandes de mixage d'air (25) et de débit d'air (85) sont montées tournantes sur l'axe de la chambre de distribution (54).

6. Dispositif générant de l'air chaud ou froid selon la revendication 5, caractérisé en ce que la commande de débit d'air (85) est solidaire d'un bras (86) portant en son extrémité libre des moyens (87) pour conduire un courant électrique, des pistes conductrices (88), (89), (90), (91) étant disposées en arc de cercle de telle sorte que lesdits moyens (87) puissent être au contact de l'une ou l'autre desdites pistes conductrices (88), (89), (90), (91), celles-ci étant reliées au moteur d'un ventilateur pour faire varier sa vitesse.

7. Dispositif générant de l'air chaud ou froid selon l'une quelconque des revendications 1 à 6, caractérisé en ce que le bras (86) est solidaire d'un bras (108) sélectionnant à distance la prise d'air extérieur ou intérieur vers le ventilateur.

8. Dispositif générant de l'air chaud ou froid selon la revendication 7, caractérisé en ce que le bras (108) porte un plot (109) guidé dans la rainure (111) d'un levier (110), ledit levier (110) étant couplé à un câble (119) de sélection à distance de la prise d'air extérieur ou intérieur.

9. Dispositif générant de l'air chaud ou froid, notamment pour véhicule, du type comportant des moyens d'admission d'un flux d'air communiquant avec des organes de climatisation et/ou de réchauffage d'air, et des moyens de distribution propres à répartir le flux d'air dans l'habitacle dudit véhicule,
caractérisé en ce qu'il comporte un boîtier d'admission d'air (5) comportant un système de cloisonnement (7, 8) délimitant un conduit central (35a) et un conduit périphérique (35b), chaque conduit étant susceptible d'être obturé respectivement par des pales (14), (15).

10. Dispositif générant de l'air chaud ou froid selon la revendication 9, caractérisé en ce que les pales (14) et (15) sont portées par un axe (17) de façon non coplanaire, l'axe (17) étant monté tournant par rapport au boîtier (5).

11. Dispositif générant de l'air chaud ou froid selon l'une quelconque des revendications 9 et 10, caractérisé en ce que quatre axes (17) portant des pales (14), (15) sont montés dans le boîtier (1, 2, 3) de façon coplanaire et deux à deux perpendiculaires de telle sorte que les pales (14) puissent être coplanaires tandis que les pales (15) ne le sont pas, et inversement.

12. Dispositif générant de l'air chaud ou froid selon l'une quelconque des revendications 9 à 11, caractérisé en ce que les pales (14) (15) peuvent prendre des positions intermédiaires selon lesquelles le flux d'air passent dans des proportions variables dans les deux conduits (35a) et (35b).

13. Dispositif générant de l'air chaud ou froid selon l'une quelconque des revendications 9 à 12, caractérisé en ce que les axes (17) portent en leur extrémité, du côté du conduit central (35a), des engrenages (22) s'engrénant de proche en proche, l'un au moins d'entre eux s'engrénant avec un engrenage (23) solidaire d'une tige de commande (24).

14. Dispositif générant de l'air chaud ou froid selon l'une quelconque des revendications 9 à 13, caractérisé en ce que les extrémités des engrenages (22) délimitent entre elles un volume sensiblement sphérique destiné à recevoir un embout sphérique (26) porté par la tige de commande (24).

15. Dispositif générant de l'air chaud ou froid selon l'une quelconque des revendications 9 à 14, caractérisé en ce que la tige de commande (24) porte en son extrémité opposé audit embout sphérique un moyen de préhension (25).

16. Dispositif générant de l'air chaud ou froid selon l'une quelconque des revendications 9 et 10, caractérisé en ce que les pales (14), (15) ont une face aimantée pour coopérer avec des parties métalliques du cloisonnement (7, 8) et assurer l'étanchéité de la position fermée.

17. Dispositif générant de l'air chaud ou froid selon l'une quelconque des revendications 9 à 16, caractérisé en ce que le conduit central (35a) communique avec l'évidemment central d'un échangeur thermique annulaire tandis que le conduit périphérique communique avec la périphérie dudit échangeur thermique annulaire.

18. Dispositif générant de l'air chaud ou froid, notamment pour véhicule, du type comportant des moyens d'admission d'un flux d'air communiquant avec des organes de climatisation et/ou de réchauffage d'air, et des moyens de distribution propres à répartir le flux d'air dans l'habitacle dudit véhicule,
caractérisé en ce qu'il comporte un échangeur thermique (34) de forme extérieure sensiblement tubulaire présentant un évidement central (50).

19. Dispositif générant de l'air chaud ou froid selon la revendication 18, caractérisé en ce que l'échangeur thermique comporte des circuits de circulation de fluide (39) sur lesquels sont empilées des ailettes annulaires (49).

20. Dispositif générant de l'air chaud ou froid selon l'une quelconque des revendications 18 et 19, caractérisé en ce que les circuits de circulation de fluide (39) communiquent avec une couronne de répartition (42) cloisonnée de façon à séparer le flux entrant du flux sortant.

21. Dispositif générant de l'air chaud ou froid selon la revendications 18, caractérisé en ce que l'échangeur thermique (34) génère de l'air chaud.

22. Dispositif générant de l'air chaud ou froid selon la revendication 21, caractérisé en ce qu'il comporte un échangeur thermique (140) générant de l'air froid de forme extérieure sensiblement tubulaire présentant un évidement central (142), (156).

23. Dispositif générant de l'air chaud ou froid selon la revendication 22, caractérisé en ce que l'évidement central (142), (156) est obstrué par une paroi (138), (152) en amont de l'échangeur thermique (140) par rapport au flux d'air, de telle sorte que le flux d'air soit dirigé vers la périphérie, puis vers l'évidemment central (142), (156) dudit échangeur thermique (140).

24. Dispositif générant de l'air chaud ou froid selon l'une quelconque des revendications 22 et 23, caractérisé en ce qu'un échangeur thermique (140) générant de l'air froid est placé en amont d'un boîtier d'admission (5), lui-même en amont dudit échangeur thermique (34) générant de l'air chaud, lesdits moyens (140), (5) et (34) communiquant de proche en proche.

25. Dispositif générant de l'air chaud ou froid selon l'une quelconque des revendications 22 et 23, caractérisé en ce qu'un boîtier d'admission d'air et un échangeur thermique générant de l'air chaud, ledit boîtier d'admission d'air communiquant avec ledit échangeur thermique générant de l'air chaud, sont placés dans l'évidemment central (156) dudit échangeur thermique (140), de telle sorte que le flux d'air entrant dans ledit évidement central (156) pénètre dans ledit boîtier d'admission d'air.
